(19)

Europäisches
Patentamt
European
Patent Office
Office européen
des brevets

(11) **EP 3 059 973 A1**

(12) **EUROPEAN PATENT APPLICATION**

(43) Date of publication:
24.08.2016 Bulletin 2016/34

(51) Int Cl.:
*H04N 21/439* (2011.01)　*H04N 21/482* (2011.01)
*H04N 21/472* (2011.01)　*H04N 21/414* (2011.01)
*H04N 21/4782* (2011.01)　*H04N 21/61* (2011.01)
*G06F 3/16* (2006.01)　*G06F 17/30* (2006.01)
*G11B 27/038* (2006.01)

(21) Application number: 16161961.4

(22) Date of filing: 28.03.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(62) Document number(s) of the earlier application(s) in
accordance with Art. 76 EPC:
**14162386.8 / 2 925 008**

(71) Applicant: **Spotify AB
113 56 Stockholm (SE)**

(72) Inventors:
• **Dziuk, Dariusz
13165 Nacka (SE)**
• **Eckerdal, Per
17079 Solna (SE)**

(74) Representative: **Ström & Gulliksson AB
Box 5275
102 46 Stockholm (SE)**

<u>Remarks:</u>
This application was filed on 23-03-2016 as a
divisional application to the application mentioned
under INID code 62.

(54) **SYSTEM AND METHOD FOR MULTI-TRACK PLAYBACK OF MEDIA CONTENT**

(57)　A system and method for multi-track playback
of media content. A media device includes a user interface, which is adapted to display a visual array of media
options, for example as a two-dimensional grid, or a list.
The user interface can be touch-sensitive, or otherwise
allow a user to select or explore a point or region within
the visual array. Each media option is associated with
one or more media content items that can be streamed
to and/or played on the media device. While the user
moves the selected point or region, for example by moving their finger over the media options, the system determines media options that are proximate to the selected
point or region, and adjusts playback parameters for corresponding media content items, such as their relative
playback volumes, by crossfading or otherwise combining playback to reflect the media options relative distances from the selected point or region.

FIGURE 1

**Description**

**Technical Field:**

Embodiments of the invention are generally related to the providing of music, video, or other forms of media content, for example as streams of media, and are particularly related to a system and method for multi-track playback of media content.

**Background:**

The digital media industry has evolved greatly within the past several years. Today's consumers enjoy the ability to access a tremendous amount of media content, such as music and videos, at any location or time of day, using a wide variety of computing systems, handheld entertainment devices, smartphones, or other types of media device. With the availability of reliable high-speed Internet connectivity, and advances in digital rights management, many users can now stream media content, on demand, from peer devices or remote servers.

However, with the increase in the amount of media content available, there exists the challenge of how to best provide access to that content. For example, users generally prefer to interact with media content libraries in an efficient, user-friendly manner that does not interfere with their enjoyment of the content. Some users may also enjoy receiving suggestions to experience new media content with which they had not previously been familiar. These are generally the types of environment in which embodiments of the invention can be used.

**Summary:**

In accordance with an embodiment, described herein is a system and method for multi-track playback of media content. A media device includes a user interface, which is adapted to display a visual array of media options, for example as a two-dimensional grid, or a list. The user interface can be touch-sensitive, or otherwise allow a user to select or explore a point or region within the visual array. Each media option is associated with one or more media content items that can be streamed to and/or played on the media device. While the user moves the selected point or region, for example by moving their finger over the media options, the system determines media options that are proximate to the selected point or region, and adjusts playback parameters for corresponding media content items, such as their relative playback volumes, by crossfading or otherwise combining playback to reflect the media options relative distances from the selected point or region.

**Brief Description of the Figures:**

Figure 1 illustrates a system for multi-track playback of media content, in accordance with an embodiment.
Figure 2 illustrates multi-track playback of media content, in accordance with an embodiment.
Figure 3 illustrates an example of a playback volume function, in accordance with an embodiment.
Figures 4A-4B further illustrates multi-track playback of media content, in accordance with an embodiment.
Figure 5 illustrates a media device with an exemplary user interface which supports multi-track playback of media content, in accordance with an embodiment.
Figure 6 further illustrates a user interface, in accordance with an embodiment.
Figure 7 further illustrates a user interface, in accordance with an embodiment.
Figure 8 further illustrates a user interface, in accordance with an embodiment.
Figure 9 further illustrates a user interface, in accordance with an embodiment.
Figure 10 further illustrates a user interface, in accordance with an embodiment.
Figure 11 further illustrates a user interface, in accordance with an embodiment.
Figure 12 illustrates an exemplary user interface, in accordance with an alternate embodiment.
Figure 13 illustrates a media device with an exemplary user interface which supports multi-track playback of media content, in accordance with an alternative embodiment.
Figure 14 further illustrates a media device, in accordance with an alternate embodiment.
Figure 15 is a flowchart of a method for multi-track playback of media content, in accordance with an embodiment.
Figure 16 is another flowchart of a method for multi-track playback of media content, in accordance with an embodiment.

**Detailed Description:**

As described above, today's consumers of digital media enjoy the ability to access a tremendous amount of media content, such as music and videos, at any location or time of day, using a wide variety of computing systems, handheld entertainment devices, smartphones, or other types of media device. However, with the increase in the amount of media content available, there exists the challenge of how to best provide access to that content.

To address this, in accordance with an embodiment, described herein is a system and method for multi-track playback of media content. A media device includes a user interface, which is adapted to display a visual array of media options, for example as a two-dimensional grid, or a list. The user interface can be touch-sensitive, or otherwise allow a user to select or explore a point or region within the visual array. Each media option is associated with one or more media content items that can be streamed to and/or played on the media device. While the user moves the selected point or region, for example by moving their finger over the media options, the system determines media options that are proximate to the selected point or region, and adjusts playback parameters for corresponding media content items, such as their relative playback volumes, by crossfading or otherwise combining playback to reflect the media options relative distances from the selected point or region.

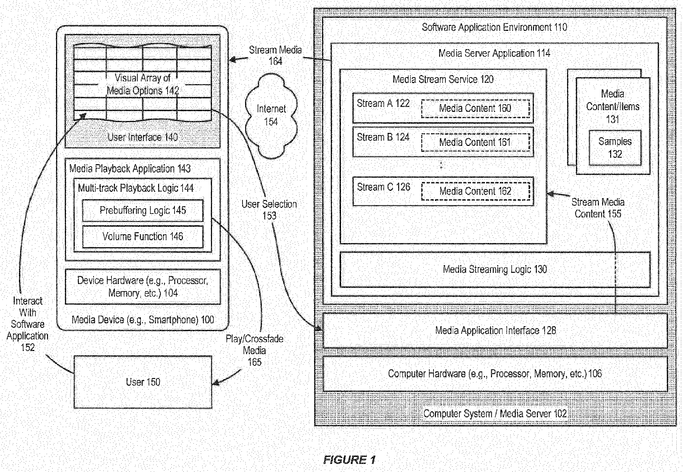

**Figure 1** illustrates a system for multi-track playback of media content, in accordance with an embodiment.

As shown in Figure 1, in accordance with an embodiment, a media device or player 100, for example a computing system, handheld entertainment device, smartphone, or other type of media device capable of playing media content, can be used to play media content that is provided by a computer system operating as a media server 102, or from another system or peer device.

Each of the media device and the computer system operating as the media server can include, respectively, one or more physical computer or hardware resources 104, 106, such as one or more processors (CPU), physical memory, network components, or other types of hardware resources.

In accordance with an embodiment, the media server can include an operating system or other processing environment which supports execution of a software application environment 110, including a media server application 114 which can be used, for example, to stream music, video, or other forms of media content. A media stream service 120 can be used to buffer media content, for streaming to one or more streams 122, 124, 126. A media application interface 128 can receive requests from media devices or other systems, to retrieve media content from the media server.

Media content or items 131 (generally referred to herein as media content items), and/or samples 132 associated with the media content items, can be provided, for example, within a database or repository, or can be received at the media server from another source.

In accordance with an embodiment, the samples can be snippets that are determined by a media content producer (e.g., a record label) to best reflect a particular media content (e.g., a particular song track) created by that content producer. For example, a snippet may be a particularly recognizable portion of a particular song. Similarly, a video content snippet may be a particularly recognizable portion of a particular video. In accordance with various embodiments, other types of media samples or snippets, or previews can be used.

For example, in accordance with an embodiment, the system can use 30, 60, or 90 second audio-preview snippets for every song track. Longer snippets can provide a sufficient audio impression for the user of tuning into a particular track and being able to hear it till the end, after which the player can continue in playing back whatever is next in that context, providing an "on-demand" perception.

A media streaming logic 130 can be used to retrieve or otherwise access the media content items, and/or the samples associated with the media content items, in response to requests from media devices or other systems, and populate the media stream service with streams of corresponding media content data that can be returned to the requesting device.

As described above, in accordance with an embodiment, the media device can be a computing system, handheld entertainment device, smartphone, or other type of device that can playback media content. Although in Figure 1 only a single media device and media server is shown, in accordance with an embodiment, the media server can support the simultaneous use of multiple media devices, and/or the media device can simultaneously access media content at multiple media servers.

In accordance with an embodiment, the media device can include a user interface 140, which is adapted to display or otherwise provide a visual array of media options 142, for example as a two-dimensional grid, a list, or other visual array format, and determine a user input. Examples of various visual arrays are described in further detail below.

Selecting a particular media option within the visual array can be used as a request or instruction to the media server application to stream or otherwise return a corresponding particular item of media content.

For example, in accordance with various embodiments, the software application environment at the media server can be used to stream or otherwise communicate music, video, or other forms of media content to the media device, wherein the user interface at the media device is adapted to display a plurality of music or video titles that correspond to music or videos stored as media content items in a database or repository at the media server.

In accordance with an embodiment, the media device can include a media playback application 143, together with a multi-track playback logic 144, prebuffering logic 145, and playback volume function 146, which can be used to control the playback and crossfading of media content items and/or samples that are received from the media server application, for playback by the media device, as described in further detail below.

In accordance with an embodiment, the prebuffering logic enables a portion of each media content item, sample, or snippet, to be pre-buffered at the media device, as decided by the multi-track playback logic. While media options are being prepared for display, their related media content can be pre-buffered at the same time, allowing for a playback experience that, from the user's perception, seems immediate.

In accordance with an embodiment, a user 150 can interact 152 with the application user interface and issue requests, for example the playing of a selected music or video item on their media device.

The user's selection of a particular media option can be communicated 153 to the media server application, via the media application interface. The media server application can then stream corresponding media content 155, including one or more streams of media content data 160, 161, 162, and subsequently stream 164 or otherwise communicate the, e.g., selected music, video, or other form of media content, to the user's media device. In accordance with an embodiment, pre-buffering requests from the media device can also be communicated to the media server application via the media application interface.

At the media device, in response to the user's interaction with the user interface, the media playback application, multi-track playback logic, and playback volume function can combine, crossfade, or otherwise play 165 the requested media content to the user, for example by playing back one or more music or videos on the media device, as described in further detail below.

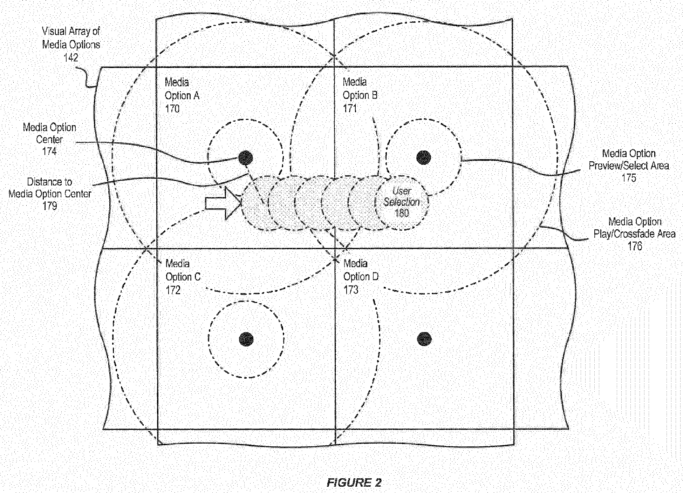

**Figure 2** illustrates multi-track playback of media content, in accordance with an embodiment.

As shown in Figure 2, in the example illustrated therein, four media options A (170), B (171), C (172), and D (173) are visualized as grid tiles, each of which has a media option center 174 (illustrated in the figure as a point), a relatively smaller media preview/select area 175 that is centered on the media option center, and a relatively larger media play/crossfade area 176 that generally covers the media option, and, depending on the particular implementation, can also extend to cover portions of other media options.

In accordance with an embodiment, a plurality of media options, for example a set of song tracks, a music playlist, or the contents of an album or a media library, can be represented on the user interface as a two-dimensional visual array, wherein the plurality of media options can be provided as an array of tiles, and wherein each tile can be associated with a particular visualization, for example a cover art identifying a represented song track.

In accordance with other embodiments, other forms of visualization can be used for the media options, for example texts, colors, images, or animations. While a selected point or region is moved within the grid of media options, the visualization or appearance of those media options that are proximate to the selected point or region can be modified, for example by varying their opacity, to reflect their status as proximate media options.

For example, in accordance with an embodiment, the opacity of a particular point or region, including the closest media option/tile and/or proximate media options/tiles, can be modified to render the closest or proximate media options to a selected point or region in a more visible manner than other (not selected, or not proximate) options/tiles.

In accordance with an embodiment, a user can provide input as a user selection of a point or region 180. In accordance with an embodiment, the user interface can be a touch-sensitive user interface, which recognizes input in the form of touch, for example the position of a user's finger or a stylus upon the user interface, to determine the selected point or region within the visual array of media options. Similarly, the user interface can determine the selected point or region as it is being moved, in response to a user input, within the visual array of media options. In the case of a mouse-based interface, the input can be provided by a mouse-down event.

In accordance with an embodiment, the system can, upon receiving the user input, initialize playback of those media options associated with the selected point or region. Selected media options (e.g., music or song tracks) can be played simultaneously according to a playback volume function, wherein playback parameters, such as the playback volume depends on the distance between the point of input and a specified point of the media option's (e.g., the song track's) array or tile visualization.

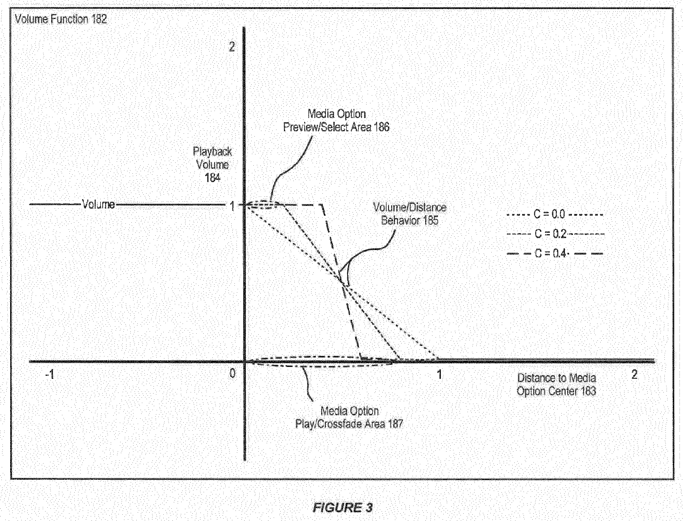

**Figure 3** illustrates an example of a playback volume function 182, in accordance with an embodiment. In accordance with an embodiment, the playback volume of a media content item can be determined as a function of distance, for example:

$$y = \max\left(0, \min\left(1, ((x-0.5) / 2(C-0.5)) + 0.5\right)\right)$$

wherein

x represents the distance 183 between the selected point or region and a particular media option element, such as its center (for example when x = 0, the user's finger is considered directly on the center of the particular media option, whereas when x = 1, the user's finger is on a media option that is adjacent to the particular media option);

y represents a playback volume 184 (for example, 0 being silent, and 1 being a maximum or full playback volume); and

C is a constant which reflects a distance from a particular media option's center that still results in full playback volume, such as the preview/select area described above.

As shown in Figure 3, depending on the value used for C (examples of which for C = 0.0, C = 0.2, and C = 0.4 are illustrated), different volume/distance behaviors 185 can be defined, which can be used to determine the size of the media preview/select area 175, the size of the media play/crossfade area 176, and the crossfading behavior, to address the needs of a particular implementation, or to suit a desired user experience.

The example illustrated in Figure 3 is provided for purposes of illustration. In accordance with other embodiments, or to address the needs of other implementations, other types of playback volume functions, including the use of different functions, criteria, and constants, can be used.

In accordance with an embodiment, in the case of a visual array representation, such as a grid, that uses a plurality of tiles, the system can use the middle point of a tile as a point of calculating distance 179 from the selection point or region. In accordance with an embodiment, if the distance is zero, then the system considers that determination to be an actual selection by the user of that media option (e.g., that song track). In accordance with an embodiment, since it may be difficult for a user to precisely select the center of a tile, an area (e.g., 20-50%) of each tile, generally corresponding to the media preview/select area in Figure 2, can be considered as centered on that particular option.

In accordance with an embodiment, if the selected point or region is more than one tile size away from a particular media option, then the playback volume of that particular media option is set to zero. In accordance with an embodiment, a two-dimensional grid can measure relative distance along both x and y axes. In the case of a one-dimensional array, for example a vertical list, then the system need only determine relative distance along one axis (e.g., the y axis), since it will not matter where the finger is along the x axis within a particular tile.

In accordance with an embodiment, media content items (e.g., song tracks), that are assigned a playback volume value of zero, are not being played. In accordance with an embodiment, while the triggering user input still lasts (for example, the user explores the available media options by keeping their finger touching the screen while moving, or the mouse button is held down), changing the input position (e.g., moving the finger, or moving the mouse cursor respectively), the system will recalculate the relative combination of the media content in the output, providing a audio crossfading effect that is controllable by the user.

In accordance with an embodiment, after ending the triggering input (e.g., the user releasing their finger, or releasing the mouse button respectively), then depending on the particular implementation, the media content item that is nearest the last movement input may either continue to play, or the playback can stop.

In accordance with an embodiment, while displaying the grid tiles the media device can pre-buffer a specified number of bytes from the audio snippets, for example 1 to 5 seconds. This enables the system, upon receiving a user input, to playback the track immediately using the pre-buffered data, and continue fetching the rest of it. This allows for minimal latency of starting the playback, which results in a very compelling user experience.

**Listing 1** provides an exemplary pseudocode of a method for determining multi-track playback of media content, in accordance with an embodiment. The pseudocode shown therein is provided for purposes of illustration. In accordance with other embodiments, other methods of determining multi-track playback of media content can be used.

```
Number clamp(Number x)
  {
     return max(0, min(1, x))
  }
# Calculate the volume for a given media element and a selection
# position. The coordinate system is assumed to be normalized so
# that the distance between different media elements is 1.
Number calculateMediaPlaybackVolume(
    Vector mediaPosition,
    Vector selectionPosition)
  {
    Number distance = |mediaPosition - selectionPosition|
    Number cappedDistance = 0.2
return clamp((distance - 0.5) / 2(cappedDistance - 0.5) + 0.5)
  }
```

*Listing 1*

In accordance with an embodiment, the system can determine if the distance between the user selection of a particular point or region, is less distant from the center of a media option than a defined distance. If it is, then the playback volume for that media option is set to a relative value of 1 (within a range of 0 to 1), which makes it easier for the user to select a media option preview point without media noise from nearby media options. The linear distance of the user selection can be determined to be 1 when the user selection is within the preview/select area, and taper off to 0 at a distance generally corresponding to the play/crossfade area.

Having calculated a clamped distance of the user selection with respect to each of a plurality of media options, the system can then determine relative playback volume based on that distance, with shorter distances having higher playback volume, and longer distances having lower playback volume.

For example, as shown in Listing 1:

```
Number distance = | mediaPosition - selectionPosition |
```

In accordance with an embodiment, if the distance from a selection to the media element's position is less than a cappedDistance, the volume will be 1, which makes it easier to hit the preview point without hearing noise from tracks nearby. In order for this to work properly, the volume must be zero when distance is more than 1-cappedDistance; otherwise the media element could be playing when another element should be the only one being played back. In this example, the value for cappedDistance must be within (0, 0.5).

Listing 1 illustrates a clamped linear function that meets the following requirements:

$0 \leq f(x) \leq 1$ (i.e., the volume is never less than silent, or more than full volume);

$f(x) + f(1 - x) = 1$ (i.e., as the user continually moves the selection between the adjacent media elements, the sum of the volumes of those two media elements is full volume);

f is monotonically decreasing (i.e., as the user moves the selection away from a media element the volume never increases); and

f(cappedDistance) = 1 (i.e., the volume at this distance is at max even when the selection isn't exactly at the very center of the media element).

In accordance with an embodiment, as a visualization feature, while the user moves the selected point or region, for example by moving their finger over the media options, the opacity of the tiles can also be modified using a distance-based function similar to the one used to calculate playback volume.

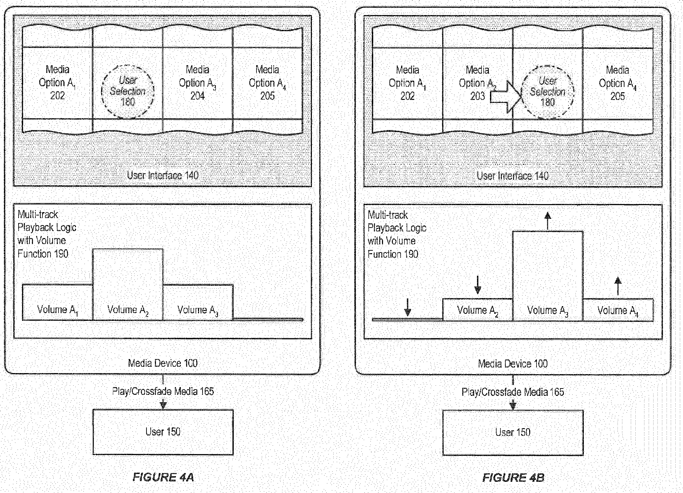

**Figures 4A-4B** further illustrate multi-track playback of media content, in accordance with an embodiment.

As shown in Figure 4A, in the example user interface illustrated therein, a visual array of media options $A_1$ through $A_4$ (202-205) are shown, each of which media options is associated with one or more media content items.

A user can make a selection of a particular media option, for example by placing a mouse cursor or some other selector, at a point or region within the visual array. As described above, in accordance with an embodiment, the user interface can be a touch-sensitive user interface, which recognizes input in the form of touch, for example the position of a user's finger or a stylus upon the user interface, to determine the selected point or region within the visual array grid of media options.

In response to receiving an input from the user interface, the multi-track playback logic can determine a set of one or more of the plurality of media options that are proximate to the selected point or region (in this example, media options $A_1$, $A_2$ and $A_3$), and, together with its playback volume function, adjust playback parameters, such as the playback volume 190 of the set of media content items associated with those media options, by crossfading or otherwise combining the playback of the set of media content items to reflect their relative distances from the selected point or region.

An output can then be provided as a played-back or crossfaded media, e.g., a set of crossfaded songs, to the user. In the example illustrated in Figure 4A, the user may perceive $A_2$ as being dominantly played, with some crossfading from sources $A_1$ and $A_3$.

In accordance with an embodiment, as shown in Figure 4B, while the user moves their, e.g., finger, stylus, mouse cursor or other selector, to change their selection, the system can determine a new point or region or selection, and a plurality of media options that are proximate to the new point or region (in this example, media options $A_2$, $A_3$ and $A_4$).

In response to receiving the input from the user interface, the multi-track playback logic, together with its playback volume function, can again adjust playback parameters, such as the playback volume of the set of media content items associated with those media options, by crossfading or otherwise combining the playback of the set of media content items to reflect their relative distances from the newly selected point or region. The output can then be provided as different played-back or crossfaded media to the user, e.g., as a different set of crossfaded songs.

For example, while the selected point or region is moved from that shown in Figure 4A to that shown in Figure 4B, the relative playback volume of media content item $A_1$ and $A_2$ are decreased (in this example the playback volume of $A_1$ is reduced almost to zero), while the relative playback volume of media content item $A_3$ and $A_4$ are increased, reflecting their relative distances from the selected point or region. Particularly, the relative playback volume of $A_3$ is increased almost to the exclusion of other media content items, reflecting the much shorter distance between $A_3$ and the user's selected point or region. In the example illustrated in Figure 4B, the user may perceive as $A_3$ being dominantly played, with little or no contribution or crossfading from any other sources.

In accordance with an embodiment if, as shown in Figure 4B, the user's finger is still held down and a sample associated with the media content for $A_3$ ends, then playback of that media content can be repeated from the beginning of the sample.

**Visual Array Grid**

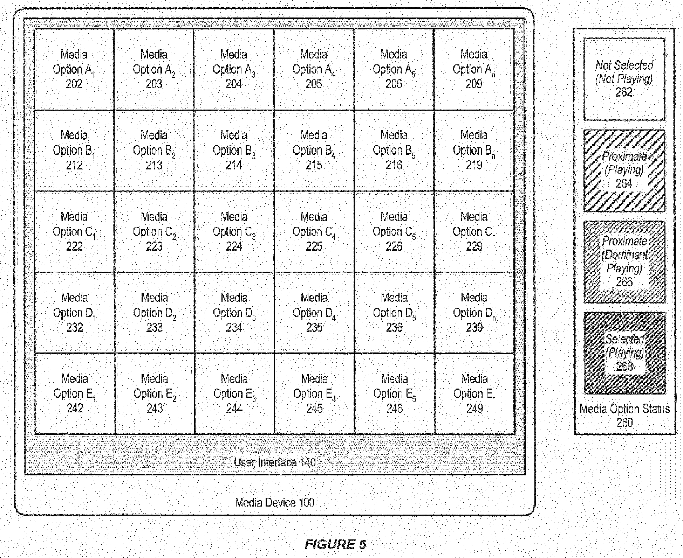

**Figure 5** illustrates a media device with an exemplary user interface which supports multi-track playback of media content, in accordance with an embodiment.

As shown in Figure 5, in accordance with an embodiment, a user interface can display, for example, on a media device, a visual array of media options arranged as a two-dimensional grid, with rows and columns of media options visualized as tiles, here illustrated as $A_1$-$A_n$ through $E_1$-$E_n$ (202-249). Each of the media options is associated with one or more media content items that can be played on the device.

For purposes of illustration, each of the media options can be associated with a status 260 that reflects, from the user's perspective, whether that particular option's associated media content item is playing or not, and, if its associated media content item is playing then whether other media content items are being played at the same time.

For example, in accordance with an embodiment, media content items can be either not selected and not playing 262; proximate to a selected point or region and playing simultaneously with other media content items 264 (i.e., from the perspective of the user, with some perceptible crossfading of other media content items); proximate to a selected point or region but playing dominantly (i.e., from the perspective of the user, with little or no contribution or crossfading of other media content items) 266; or selected and playing (i.e., by itself with no other media content items playing simultaneously) 268.

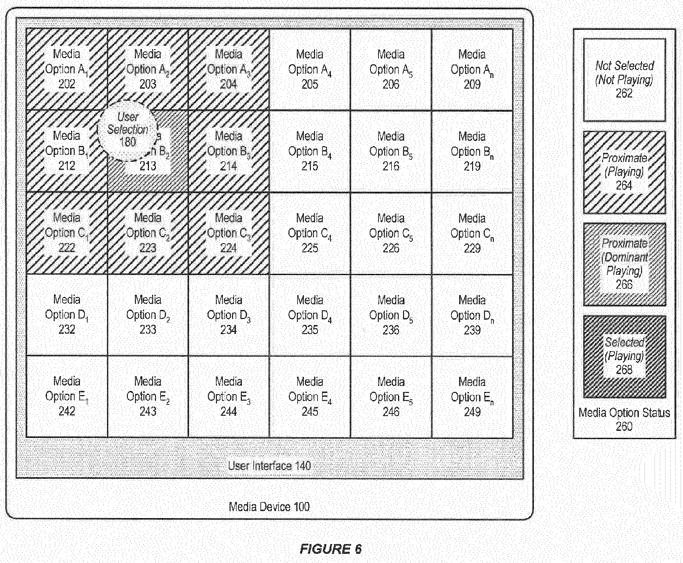

**Figure 6** further illustrates a user interface, in accordance with an embodiment. As shown in Figure 6, for example, a user may initially select a region (180) of the user interface generally located in the region of, but not precisely upon, media option $B_2$ (213), whose neighboring or proximate media options include $A_1$ (202), $A_2$ (203), $A_3$ (204), $B_1$ (212), $B_3$ (214), $C_1$ (222), $C_2$ (223) and $C_3$ (224).

In accordance with an embodiment, the multi-track playback logic can adjust the playback volume of media content items associated with each of these proximate media options, by crossfading or otherwise combining their playback, to reflect their relative distances from the selected point or region. The crossfaded or combined result can then be provided as a played-back media to the user.

In this example, the user may perceive an output from their media device in which media content $B_2$ is being dominantly played, with some perceptible combination of one or more of its neighboring or proximate media options as illustrated in Figure 6.

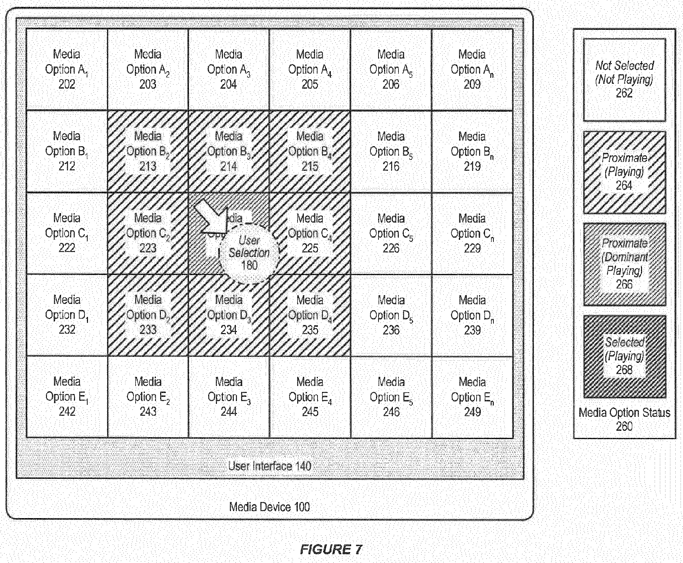

**Figure 7** further illustrates a user interface, in accordance with an embodiment. As shown in Figure 7, for example, a user may move their finger, mouse cursor, or other selector, to select or explore a new point or region of the user interface generally located in the region of media option $C_3$, but which is also proximate to media options $B_2$, $B_3$, $B_4$, $C_2$, $C_4$ (225), $D_2$ (233), $D_3$ (234) and $D_4$ (235). The multi-track playback logic can again adjust playback parameters, such as the playback volume of the set of media content items associated with these media options, by crossfading or otherwise combining their playback, to reflect their relative distances from the selected point or region.

In this example, the user may perceive an output from their media device in which media content $C_3$ is being dominantly played, with some perceptible combination of one or more of its neighboring or proximate media options as illustrated in Figure 7.

Additionally, while the user moves their finger, mouse cursor, or other selector from the position shown in Figure 6, to the position shown in Figure 7, they may perceive a crossfading of media output as the multi-track playback logic gradually adjusts the playback volume of media content items from the initial output in which $B_2$ is being dominantly played, with some perceptible combination of one or more of its neighboring or proximate media options, to the subsequent output in which $C_3$ is being dominantly played, with some perceptible combination of one or more of its neighboring or proximate media options.

In accordance with an embodiment, a particular number of media options proximate to the selection point or region can be used, for example a window of nine (i.e., 3 x 3 tiles) proximate media options. However, in accordance with other embodiments, different numbers of media options proximate to the selection point or region can be used, and the chosen media options need not necessarily be in a square or other uniform pattern.

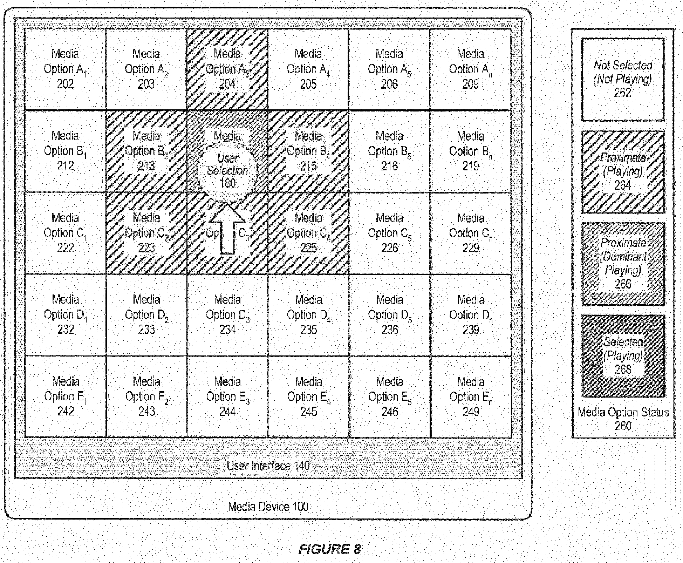

**Figure 8** further illustrates a user interface, in accordance with an embodiment.

As shown in Figure 8, for example, a user may again move their finger, mouse cursor, or other selector, to select or explore another new point or region of the user interface generally located at media option $B_3$, but which is also proximate to media options $A_3$ (204), $B_2$, $B_4$ (215), $C_2$, $C_3$ and $C_4$.

Again, the multi-track playback logic can adjust playback parameters, such as the playback volume of the set of media content items associated with these media options, by crossfading or otherwise combining their playback, to reflect their relative distances from the selected point or region, in this example using just seven media options.

Again also, the user may perceive a crossfading of media output as the multi-track playback logic gradually adjusts the playback volume of media content items from the original output in which $C_3$ is being dominantly played, to the subsequent output in which $B_3$ is being dominantly played.

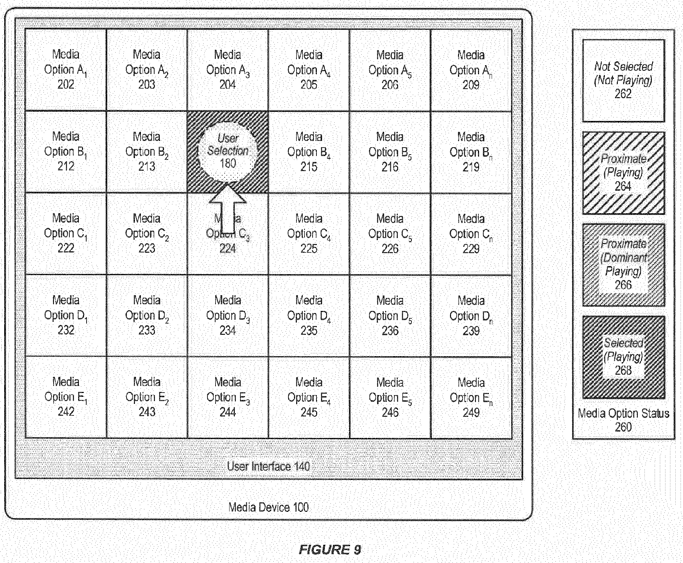

**Figure 9** further illustrates a user interface, in accordance with an embodiment. As shown in Figure 9, in accordance with an embodiment, if the user moves their finger, mouse cursor, or other selector, to select the center of a point or region of the user interface generally located at a media option, and leaves it there for a period of time, then in accordance with an embodiment, that media content item can be selected, and played by itself (i.e., from the perspective of the user, with no other media content items playing simultaneously).

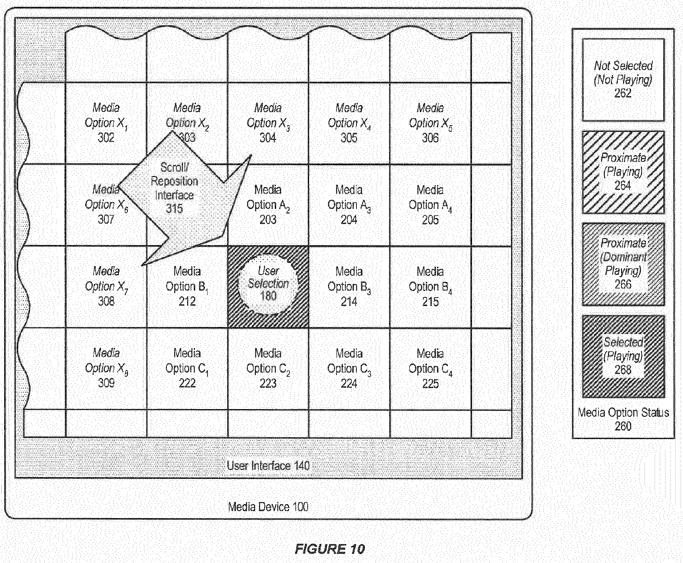

**Figure 10** further illustrates a user interface, in accordance with an embodiment. As shown in Figure 10, in accordance with an embodiment, while a media content item is selected and being played, the grid can be automatically scrolled or repositioned 315, both generally centering the currently selected point or region, and in this example displaying on the user interface new or additional media options $X_1$ - $X_8$ (302-309), which can be subsequently selected by the user.

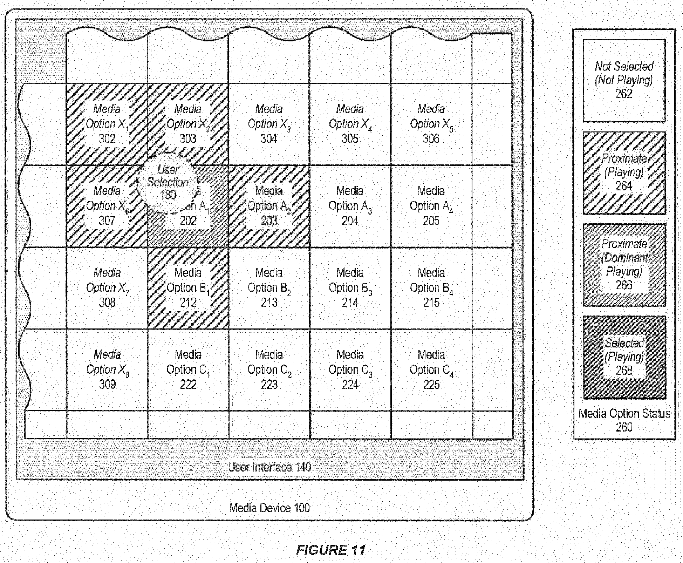

**Figure 11** further illustrates a user interface, in accordance with an embodiment. As shown in Figure 11, for example, a user may select a region of the user interface generally located at media options $A_1$ (202), with neighboring or proximate media options $A_2$, $B_1$, $X_1$ (302), $X_2$ (303) and $X_6$ (307).

The process can generally continue as described above, with the user continuing to move the selected point or region within the visual array, to further explore media options, and the playback of proximate media content items continually adjusted, by crossfading or otherwise combining their playback. For example, when the grid is automatically scrolled or repositioned, the new or additional media options can be explored by the user, or offered as suggestions to browse and experience new media content with which they had not previously been familiar.

In accordance with an embodiment, if the user's finger is lifted from the user interface, the device can, for example, play a song to its end, by appending media content to a previously-played sample or snippet, so that playback seamlessly flows from the end of the sample or snippet into the remainder of the song. If the sample is relatively long (e.g., 90 seconds) and located near the end of the song, the device can play the sample to its end. At the end, a next song can be chosen according to shuffle rules, a playlist, or other means.

In accordance with another embodiment, if the user's finger is lifted from the user interface, the sample or snippet can stop playing, and an original, e.g. song, return to being played. If the user immediately taps the same location, the device can play the last-selected media content from its beginning.

The examples provided above of various user interaction techniques are provided for purposes of illustration. In accordance with other embodiments, or to address the needs of other implementations, other types of user interaction techniques can be supported.

## Alternative Visual Array Examples

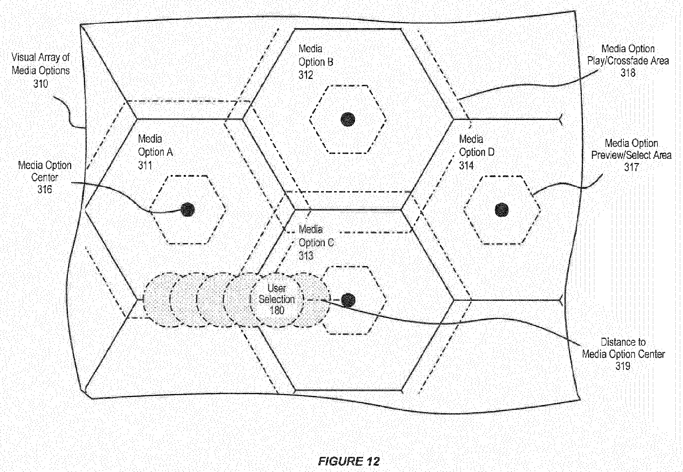

**Figure 12** illustrates an exemplary user interface, in accordance with an alternate embodiment.

As shown in Figure 12, in accordance with an embodiment, a user interface can display a visual array 310 of media options arranged as a two-dimensional grid of, in this example, hexagonal tiles, with media options A-D (311-314). As described above, each of the media options can have a media option center 316, a relatively smaller media preview/select area 317 centered on the media option center, and a relatively larger media play/crossfade area 318 that generally covers the media option, and, depending on the particular implementation, can extend to cover portions of other media options.

The system can use the middle point of a tile as a point of calculating distance 319 from the selection point or region, and adjusting the playback parameters, such as the playback volume for each media option, as described above.

The above are provided by way of example. In accordance with other embodiments, other types of user interface, visual array, and tile shapes can be used.

## Scrollable List Visual Array

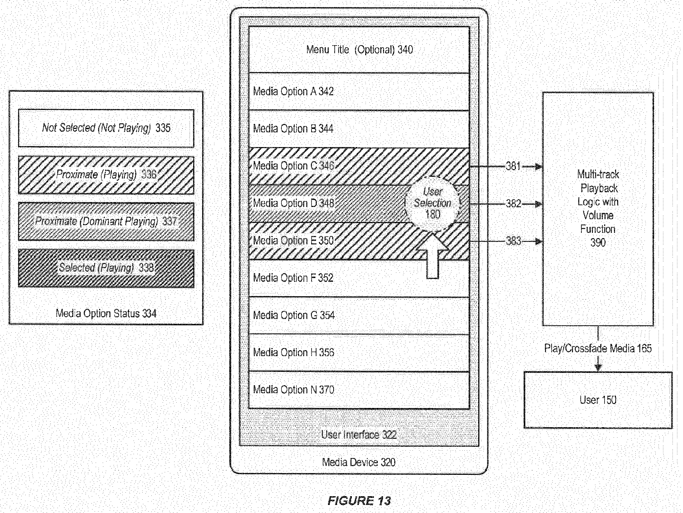

**Figure 13** illustrates a media device with an exemplary user interface which supports multi-track playback of media content, in accordance with an alternative embodiment. As shown in Figure 13, in accordance with an embodiment, a media device 320 having a user interface 322 can display an optional menu or other information 340, and a visual array of media options arranged in this example as a scrollable list A - N (342-370), each of which media options is associated with one or more media content items that can be played.

For purposes of illustration, each of the media options can be similarly associated with a status 334 that reflects, from the user's perspective, whether that particular option's associated media content item is playing, or not playing, and, if its associated media content item is playing then whether other media content items are being played at the same time; for example not selected and not playing 335; proximate to a selected point or region and playing simultaneously with other media content items 336; proximate to a selected point or region but playing dominantly 337; or selected and playing by itself 338.

In accordance with an embodiment, when none of the displayed media options (e.g., 342-370) are currently playing, an alternative media content can be played, which can then be paused, or its volume reduced completely, when any of the displayed options are transition to a playing status.

For example, a user can select a region proximate to media options C (346), D (348), and E (350), which causes those media contents to be retrieved, e.g., from the media server, and provided 381, 382, 383 to the multi-track playback logic with playback volume function 390, where the media contents can be played and crossfaded as described above, and provided to the user.

In accordance with an embodiment, when a menu of media options is displayed, the device can start to pre-buffer samples of, e.g. the songs represented by the media options in that menu. When a media option transitions from a "not playing" status to a "playing" status, playback can begin with the pre-buffered data, while the device streams more data and seamlessly move playback over to the streamed data. Streamed data can then be similarly buffered locally for a period of time, or until the user stops using the application.

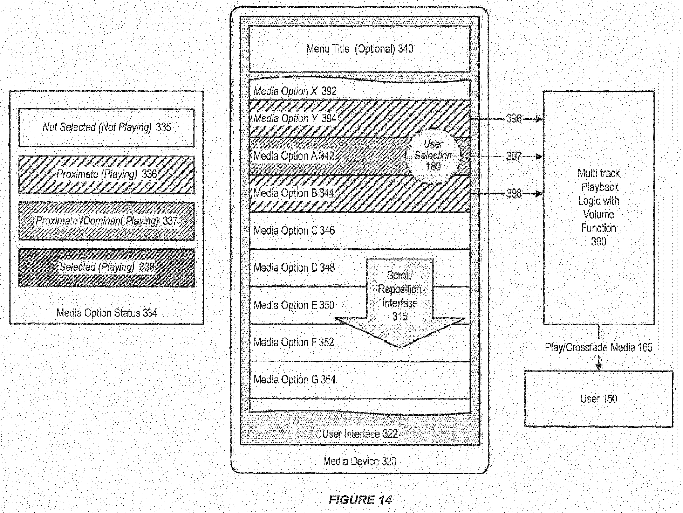

**Figure 14** further illustrates a media device, in accordance with an alternate embodiment. As shown in Figure 14, while a media content item is selected and being played, the list can be automatically scrolled or repositioned, for example centering the selected media option, and displaying on the user interface additional media options, such as X (392) and Y (394). A user may select or explore regions proximate to media options A (342), B (344), and Y, which causes those media contents to be retrieved from the media server and provided 396, 397, 398 to the multi-track playback logic with playback volume function where it can be played and crossfaded as described above, and provided to the user.

In accordance with an embodiment, the action of exploring a particular media option (e.g., A 342) causes the display to scroll down, without the user's finger having to move, and automatically allowing the user to explore, in this example, media option Y 394, while the list moves.

The process can generally continue as described above, with the user continuing to move the selected point or region within the visual array, to further explore media options, and the playback of proximate media content items continually adjusted, by crossfading or otherwise combining their playback.

**Multi-track Playback Method**

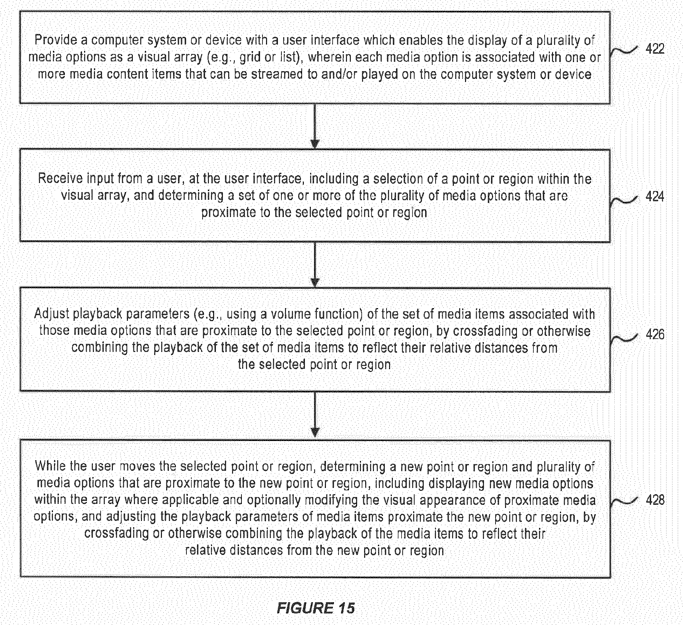

**Figure 15** is a flowchart of a method for multi-track playback of media content, in accordance with an embodiment.

As shown in Figure 15, at step 422, a computer system or device is provided with a user interface which enables the display of a plurality of media options as a visual array (e.g., a grid or list), wherein each media option is associated with one or more media content items that can be streamed to and/or played on the computer system or device.

At step 424, an input is received from a user, at the user interface, including a selection of a point or region within the visual array, which can be used to determine a set of one or more of the plurality of media options that are proximate to the selected point or region.

At step 426, the playback parameters (e.g., the playback volume) of the set of media content items associated with those media options that are proximate to the selected point or region, are adjusted by crossfading or otherwise combining the playback of the set of media content items to reflect their relative distances from the selected point or region.

At step 428, while the user moves the selected point or region, a new point or region and plurality of media options that are proximate to the new point or region is determined, including displaying new or additional media options within the visual array where applicable and optionally modifying the visual appearance of proximate media options. The playback of media content items proximate the new point or region are again adjusted, by crossfading or otherwise combining their playback to reflect their relative distances from the new point or region.

The process can continue with the user continuing to move the selected point or region and the playback of proximate media content items continually adjusted, by crossfading or otherwise combining their playback.

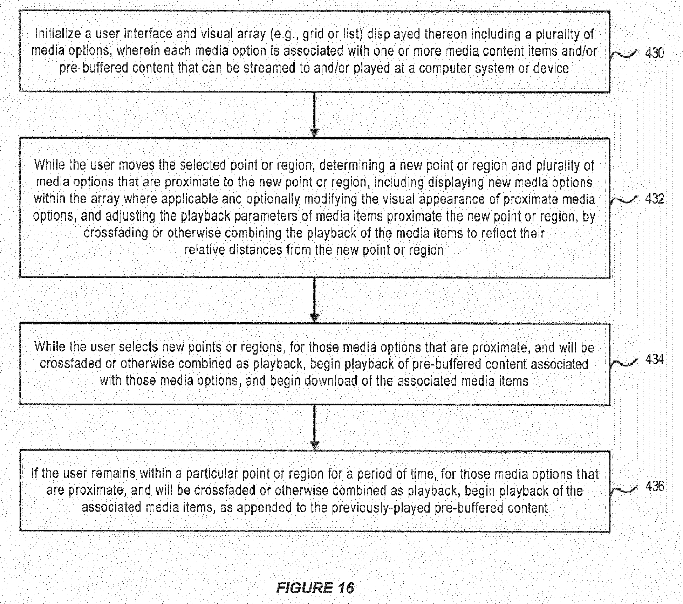

**Figure 16** is another flowchart of a method for multi-track playback of media content, in accordance with an embodiment.

As shown in Figure 16, at step 430, a user interface is initialized with a visual array displayed thereon including a plurality of media options, wherein each media option is associated with one or more media content items and/or pre-buffered content that can be streamed to and/or played on the computer system or device.

At step 432, while the user moves the selected point or region, a new point or region and plurality of media options that are proximate to the new point or region is determined, and the playback parameters of proximate media adjusted by crossfading or otherwise combining their playback to reflect their relative distances from the new point or region, as described above.

At step 434, while the user selects new points or regions, for those media options that are proximate to the new point or region, and will be crossfaded or otherwise combined as playback, the system can begin playback of pre-buffered content associated with those media options, and also begin download of the associated media content items.

At step 436, if the user remains within a particular point or region for a period of time, for those media options that are proximate, and will be crossfaded or otherwise combined as playback, the system begins playback of the associated media content items, as appended to the previously-played pre-buffered content.

Embodiments of the present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of embodiments of the present invention has been provided for the purposes of illustration and description. It is not intended to be exhaustive or to limit the invention to the precise forms disclosed. Many modifications and variations will be apparent to the practitioner skilled in the art.

For example, although the above examples generally describe the providing of music media content, such as songs, and the use of song cover art as a visualization to be used with the media options, the systems, methods and techniques described herein can be used with other forms of media content, including but not limited to video media content. Additionally, although the above examples generally describe the use of grid, list, or other tile-based visual arrays, with generally square, rectangular, or hexagonal tiles, the systems, methods and techniques can be used with other types of visual arrays, layouts, shapes of media options, visualization, and appearances.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalents.

*Selected Example Embodiments described herein:*

The technology described in this disclosure thus encompasses without limitation the following Numbered Example Embodiments (NEE's):

NEE1. A system for multi-track playback of media content, comprising:

a media device (100), including a processor (104);
a user interface (140), provided at the media device, which displays a visual array of media options (142), wherein each media option is associated with one or more media content items (131), including one or more music, video or other media content, that can be streamed to or played on the media device; and
a playback logic (143, 144), provided within the media device, which is configured so that, while a selected point or region (152) is determined by the user interface as being moved in response to user input, within the visual array of media options, the system determines media options (153) that are proximate to the selected point or region, and adjusts playback parameters for corresponding media content items (155, 164), by crossfading or otherwise combining playback (165) to reflect the media options relative distances from the selected point or region.

NEE2. The system of NEE 1, wherein pre-buffering (145) of the media content items is initiated when the visual array of media options is displayed.

NEE 3. The system of NEE 1, wherein the playback parameters adjusted for media content items corresponding to those media options that are proximate to the selected point or region, includes the playback volume (184) of the media content items.

NEE 4. The system of NEE 1, wherein the user interface is a touch-sensitive user interface, which is adapted to recognize input in the form of touch to determine the selected point or region (180) within the visual array of media options.

NEE 5. The system of NEE 4, wherein, while the selected point or region is determined by the user interface as being moved within the grid of media options, the visualization or appearance of those media options that are proximate to the selected point or region is modified to reflect their status (260) as proximate media options.

NEE 6. The system of NEE 1, whereupon the selected point or region being determined by the user interface as having being moved, the visual array is repositioned (315) so that that the selected point or region is generally centered within the user interface, and so that new or additional media options are displayed within the repositioned visual array.

NEE 7. The system of NEE 1, wherein while new points or regions are determined by the user interface as being selected, for those media content items that are crossfaded or otherwise combined to reflect the media options relative distances from the selected point or region, the system first begins playback of samples associated with those media content items, and wherein upon selected point or region remaining within a particular region of the visual array for a period of time, the system subsequently begins playback of associated media content items that are appended to the previously-played samples.

NEE 8. A method for multi-track playback of media content, comprising:

  providing a user interface, at a media device, which displays a visual array of media options, wherein each media option is associated with one or more media content items, including one or more music, video or other media content, that can be streamed to or played on the media device; and
  while a selected point or region is determined by the user interface as being moved in response to user input, within the visual array of media options, determining media options that are proximate to the selected point or region, and adjusting playback parameters for corresponding media content items, by crossfading or otherwise combining playback to reflect the media options relative distances from the selected point or region.

NEE 9. The method of NEE 8, wherein pre-buffering of the media content items is initiated when the visual array of media options is displayed.

NEE 10. The method of NEE 8, wherein the playback parameters adjusted for media content items corresponding to those media options that are proximate to the selected point or region, includes the playback volume of the media content items.

NEE 11. The method of NEE 8, wherein the user interface is a touch-sensitive user interface, which is adapted to recognize input in the form of touch to determine the selected point or region within the visual array of media options.

NEE 12. The method of NEE 11, wherein, while the selected point or region is determined by the user interface as being moved within the grid of media options, the visualization or appearance of those media options that are proximate to the selected point or region is modified to reflect their status as proximate media options.

NEE 13. The method of NEE 8, whereupon the selected point or region being determined by the user interface as having being moved, the visual array is repositioned so that that the selected point or region is generally centered within the user interface, and so that new or additional media options are displayed within the repositioned visual array.

NEE 14. The method of NEE 8, wherein while new points or regions are determined by the user interface as being selected, for those media content items that are crossfaded or otherwise combined to reflect the media options relative distances from the selected point or region, the system first begins playback of samples associated with those media content items, and wherein upon selected point or region remaining within a particular region of the visual array for a period of time, the system subsequently begins playback of associated media content items that are appended to the previously-played samples.

NEE 15. A non-transitory computer readable storage medium, including instructions stored thereon which when read and executed by one or more computers cause the one or more computers to perform the steps comprising:

providing a user interface, at a media device, which displays a visual array of media options, wherein each media option is associated with one or more media content items, including one or more music, video or other media content, that can be streamed to or played on the media device; and

while a selected point or region is determined by the user interface as being moved in response to user input, within the visual array of media options, determining media options that are proximate to the selected point or region, and adjusting playback parameters for corresponding media content items, by crossfading or otherwise combining playback to reflect the media options relative distances from the selected point or region.

**Claims**

1. A media device (100) for multi-track playback of streamed media content, comprising:

a processor (104);
a user interface (140); and
playback logic (143; 144), the media device (100) being **characterized in that**:

the user interface (140) is adapted to display a visual array of media options (142), wherein each media option (142) is associated with one or more media content items (131) that can be streamed to the media device (100); and wherein the media options (142) are visualized as grid tiles, and each one of the grid tiles has a media option center (174), a relatively smaller media preview/select area (175) that is centered at the media option center (174), and a relatively larger media play/crossfade area (176) that generally covers the media option (142); **in that**

the playback logic (143, 144), is configured so that, while a selected point or region (180) is determined by the user interface (140) as being moved in response to user input, within the visual array of media options (142), the media device (100) determines media options (142) that are proximate to the selected point or region (175; 180) and adjusts a playback volume for corresponding media content items by crossfading playback to reflect the media options' relative distances from the selected point or region (175; 180), whereby the playback volume is determined as a function of distance from the selected point or region (175; 180); and **in that**

the user interface (140) is further configured so that, while a selected point or region (180) is determined by the user interface (140) as being moved in response to user input, within the visual array of media options (142), a size of the media play/crossfade area (176) is adjusted depending on the playback volume, wherein the playback volume is dependent on a value of a constant that reflects a distance from a particular media option's center that results in full playback volume.

2. The media device (100) according to claim 1, wherein the user interface (140) is further configured so that, while a selected point or region (180) is determined by the user interface (140) as being moved in response to user input, within the visual array of media options (142), a size of the media preview/select area (175) is adjusted depending on the playback volume, wherein the playback volume is dependent on a value of a constant that reflects a distance from a particular media option's center that results in full playback volume.

3. The media device (100) according to claim 1 or 2, wherein a said media content item (131) includes one or more music, video or other media content.

4. The media device (100) according to anyone of the claims 1-3, further comprising:

pre-buffering logic (145) configured so that, while the user interface (140) displays the visual array of media options (142), a specified number of bytes from audio snippets are pre-buffered.

5. The media device (100) according to any one of the claims 1-4, wherein the user interface (140) is a touch-sensitive user interface, which is adapted to recognize user input in the form of a touch upon the user interface (140) to determine the selected point or region (180) within the visual array of media options (142).

6. A method for multi-track playback of streamed media content, the method being **characterized by** comprising:

displaying, a visual array of media options (142) at a user interface (140) of a media device (100), wherein each media option (142) is associated with one or more media content items (131) that can be streamed to the media device (100); and

visualizing the media options (142) as grid tiles, wherein each one of the grid tiles has a media option center (174), a relatively smaller media preview/select area (175) that is centered at the media option center (174), and a relatively larger media play/crossfade area (176) that generally covers the media option (142); and

while a selected point or region (180) is determined by the user interface (140) as being moved in response to user input, within the visual array of media options (142), determining media options (142) that are proximate to the selected point or region (175; 180) and adjusting a playback volume for corresponding media content items by crossfading playback to reflect the media options' relative distances from the selected point or region (175; 180), whereby the playback volume is determined as a function of distance from the selected point or region (175; 180); and

while a selected point or region (180) is determined by the user interface (140) as being moved in response to user input, within the visual array of media options (142), adjusting a size of the media play/crossfade area (176) depending on the playback volume, wherein the playback volume is dependent on a value of a constant that reflects a distance from a particular media option's center that results in full playback volume.

7. The method according to claim 6, comprising:

while a selected point or region (180) is determined by the user interface (140) as being moved in response to user input, within the visual array of media options (142), adjusting a size of the media preview/select area (175) depending on the playback volume, wherein the playback volume is dependent on a value of a constant that reflects a distance from a particular media option's center that results in full playback volume.

8. The method according to claim 6 or 7, wherein a said media content item (131) includes one or more music, video or other media content.

9. The method according to any one of the claims 6-8, further comprising:

prebuffering a specified number of bytes from audio snippets while the user interface (140) displays the visual array of media options (142).

10. Computer program product, comprising instructions which, when executed on at least one processor, cause the at least one processor to carry out the method according to any one of claims 6-9.

11. The computer program product according to claim 10, wherein the computer program product is a non-transitory computer readable storage medium.

FIGURE 1

Visual Array of
Media Options
142

Media
Option A
170

Media
Option B
171

Media Option
Center
174

Media Option
Preview/Select Area
175

Distance to
Media Option Center
179

User
Selection
180

Media Option
Play/Crossfade Area
176

Media
Option C
172

Media
Option D
173

FIGURE 2

FIGURE 3

**FIGURE 4A**

**FIGURE 4B**

| Media Option A₁ 202 | Media Option A₂ 203 | Media Option A₃ 204 | Media Option A₄ 205 | Media Option A₅ 206 | Media Option Aₙ 209 |
|---|---|---|---|---|---|
| Media Option B₁ 212 | Media Option B₂ 213 | Media Option B₃ 214 | Media Option B₄ 215 | Media Option B₅ 216 | Media Option Bₙ 219 |
| Media Option C₁ 222 | Media Option C₂ 223 | Media Option C₃ 224 | Media Option C₄ 225 | Media Option C₅ 226 | Media Option Cₙ 229 |
| Media Option D₁ 232 | Media Option D₂ 233 | Media Option D₃ 234 | Media Option D₄ 235 | Media Option D₅ 236 | Media Option Dₙ 239 |
| Media Option E₁ 242 | Media Option E₂ 243 | Media Option E₃ 244 | Media Option E₄ 245 | Media Option E₅ 246 | Media Option Eₙ 249 |

User Interface 140

Media Device 100

Not Selected
(Not Playing)
262

Proximate
(Playing)
264

Proximate
(Dominant
Playing)
266

Selected
(Playing)
268

Media Option Status
260

*FIGURE 5*

| Media Option A₁ 202 | Media Option A₂ 203 | Media Option A₃ 204 | Media Option A₄ 205 | Media Option A₅ 206 | Media Option Aₙ 209 |
|---|---|---|---|---|---|
| Media Option B₁ 212 | User Selection 180 h B₂ 213 | Media Option B₃ 214 | Media Option B₄ 215 | Media Option B₅ 216 | Media Option Bₙ 219 |
| Media Option C₁ 222 | Media Option C₂ 223 | Media Option C₃ 224 | Media Option C₄ 225 | Media Option C₅ 226 | Media Option Cₙ 229 |
| Media Option D₁ 232 | Media Option D₂ 233 | Media Option D₃ 234 | Media Option D₄ 235 | Media Option D₅ 236 | Media Option Dₙ 239 |
| Media Option E₁ 242 | Media Option E₂ 243 | Media Option E₃ 244 | Media Option E₄ 245 | Media Option E₅ 246 | Media Option Eₙ 249 |

User Interface 140

Media Device 100

Not Selected (Not Playing) 262

Proximate (Playing) 264

Proximate (Dominant Playing) 266

Selected (Playing) 268

Media Option Status 260

**FIGURE 6**

| Media Option A₁ 202 | Media Option A₂ 203 | Media Option A₃ 204 | Media Option A₄ 205 | Media Option A₅ 206 | Media Option Aₙ 209 |
|---|---|---|---|---|---|
| Media Option B₁ 212 | Media Option B₂ 213 | Media Option B₃ 214 | Media Option B₄ 215 | Media Option B₅ 216 | Media Option Bₙ 219 |
| Media Option C₁ 222 | Media Option C₂ 223 | dia Copy User Selection 180 | Media Option C₄ 225 | Media Option C₅ 226 | Media Option Cₙ 229 |
| Media Option D₁ 232 | Media Option D₂ 233 | Media Option D₃ 234 | Media Option D₄ 235 | Media Option D₅ 236 | Media Option Dₙ 239 |
| Media Option E₁ 242 | Media Option E₂ 243 | Media Option E₃ 244 | Media Option E₄ 245 | Media Option E₅ 246 | Media Option Eₙ 249 |

User Interface 140

Media Device 100

| Not Selected (Not Playing) 262 |
|---|
| Proximate (Playing) 264 |
| Proximate (Dominant Playing) 266 |
| Selected (Playing) 268 |

Media Option Status 260

**FIGURE 7**

| Media Option A₁ 202 | Media Option A₂ 203 | Media Option A₃ 204 | Media Option A₄ 205 | Media Option A₅ 206 | Media Option Aₙ 209 |
|---|---|---|---|---|---|
| Media Option B₁ 212 | Media Option B₂ 213 | Media User Selection 180 | Media Option B₄ 215 | Media Option B₅ 216 | Media Option Bₙ 219 |
| Media Option C₁ 222 | Media Option C₂ 223 | Op⋅ C₃ | Media Option C₄ 225 | Media Option C₅ 226 | Media Option Cₙ 229 |
| Media Option D₁ 232 | Media Option D₂ 233 | Media Option D₃ 234 | Media Option D₄ 235 | Media Option D₅ 236 | Media Option Dₙ 239 |
| Media Option E₁ 242 | Media Option E₂ 243 | Media Option E₃ 244 | Media Option E₄ 245 | Media Option E₅ 246 | Media Option Eₙ 249 |

User Interface 140

Media Device 100

| Media Option Status 260 |
|---|
| Not Selected (Not Playing) 262 |
| Proximate (Playing) 264 |
| Proximate (Dominant Playing) 266 |
| Selected (Playing) 268 |

*FIGURE 8*

| Media Option A₁ 202 | Media Option A₂ 203 | Media Option A₃ 204 | Media Option A₄ 205 | Media Option A₅ 206 | Media Option Aₙ 209 |
|---|---|---|---|---|---|
| Media Option B₁ 212 | Media Option B₂ 213 | User Selection 180 | Media Option B₄ 215 | Media Option B₅ 216 | Media Option Bₙ 219 |
| Media Option C₁ 222 | Media Option C₂ 223 | Media Option C₃ 224 | Media Option C₄ 225 | Media Option C₅ 226 | Media Option Cₙ 229 |
| Media Option D₁ 232 | Media Option D₂ 233 | Media Option D₃ 234 | Media Option D₄ 235 | Media Option D₅ 236 | Media Option Dₙ 239 |
| Media Option E₁ 242 | Media Option E₂ 243 | Media Option E₃ 244 | Media Option E₄ 245 | Media Option E₅ 246 | Media Option Eₙ 249 |

User Interface 140

Media Device 100

Not Selected
(Not Playing)
262

Proximate
(Playing)
264

Proximate
(Dominant
Playing)
266

Selected
(Playing)
268

Media Option Status
260

FIGURE 9

| | | | | | Media Option Status 260 |
|---|---|---|---|---|---|

Media Option $X_1$ 302 | Media Option $X_2$ 303 | Media Option $X_3$ 304 | Media Option $X_4$ 305 | Media Option $X_5$ 306

Media Option $X_6$ 307 | Scroll/ Reposition Interface 315 | Media Option $A_2$ 203 | Media Option $A_3$ 204 | Media Option $A_4$ 205

Media Option $X_7$ 308 | Media Option $B_1$ 212 | User Selection 180 | Media Option $B_3$ 214 | Media Option $B_4$ 215

Media Option $X_8$ 309 | Media Option $C_1$ 222 | Media Option $C_2$ 223 | Media Option $C_3$ 224 | Media Option $C_4$ 225

Not Selected (Not Playing) 262

Proximate (Playing) 264

Proximate (Dominant Playing) 266

Selected (Playing) 268

User Interface 140

Media Device 100

**FIGURE 10**

Media Option X₁ 302
Media Option X₂ 303
Media Option X₃ 304
Media Option X₄ 305
Media Option X₅ 306

Media Option X₆ 307
User Selection 180
Media Option A₁ 202
Media Option A₂ 203
Media Option A₃ 204
Media Option A₄ 205

Media Option X₇ 308
Media Option B₁ 212
Media Option B₂ 213
Media Option B₃ 214
Media Option B₄ 215

Media Option X₈ 309
Media Option C₁ 222
Media Option C₂ 223
Media Option C₃ 224
Media Option C₄ 225

User Interface 140

Media Device 100

Not Selected (Not Playing) 262

Proximate (Playing) 264

Proximate (Dominant Playing) 266

Selected (Playing) 268

Media Option Status 260

FIGURE 11

Visual Array of
Media Options
310

Media Option
Center
316

Media
Option B
312

Media
Option A
311

Media
Option D
314

Media
Option C
313

User
Selection
180

Media Option
Play/Crossfade Area
318

Media Option
Preview/Select Area
317

Distance to
Media Option Center
319

*FIGURE 12*

25

**FIGURE 13**

Media Option Status 334

- Not Selected (Not Playing) 335
- Proximate (Playing) 336
- Proximate (Dominant Playing) 337
- Selected (Playing) 338

Media Device 320

User Interface 322

Menu Title (Optional) 340

Media Option A 342

Media Option B 344

Media Option C 346

Media Option D 348

User Selection 180

Media Option E 350

Media Option F 352

Media Option G 354

Media Option H 356

Media Option N 370

381

382

383

Multi-track Playback Logic with Volume Function 390

Play/Crossfade Media 165

User 150

Menu Title (Optional) 340

Media Option X 392

Media Option Y 394

Media Option A 342

User Selection 180

Media Option B 344

Media Option C 346

Media Option D 348

Scroll/ Reposition Interface 315

Media Option E 350

Media Option F 352

Media Option G 354

User Interface 322

Media Device 320

Not Selected (Not Playing) 335

Proximate (Playing) 336

Proximate (Dominant Playing) 337

Selected (Playing) 338

Media Option Status 334

396

397

398

Multi-track Playback Logic with Volume Function 390

Play/Crossfade Media 165

User 150

**FIGURE 14**

27

Provide a computer system or device with a user interface which enables the display of a plurality of media options as a visual array (e.g., grid or list), wherein each media option is associated with one or more media content items that can be streamed to and/or played on the computer system or device
422

Receive input from a user, at the user interface, including a selection of a point or region within the visual array, and determining a set of one or more of the plurality of media options that are proximate to the selected point or region
424

Adjust playback parameters (e.g., using a volume function) of the set of media items associated with those media options that are proximate to the selected point or region, by crossfading or otherwise combining the playback of the set of media items to reflect their relative distances from the selected point or region
426

While the user moves the selected point or region, determining a new point or region and plurality of media options that are proximate to the new point or region, including displaying new media options within the array where applicable and optionally modifying the visual appearance of proximate media options, and adjusting the playback parameters of media items proximate the new point or region, by crossfading or otherwise combining the playback of the media items to reflect their relative distances from the new point or region
428

*FIGURE 15*

Initialize a user interface and visual array (e.g., grid or list) displayed thereon including a plurality of media options, wherein each media option is associated with one or more media content items and/or pre-buffered content that can be streamed to and/or played at a computer system or device ~ 430

While the user moves the selected point or region, determining a new point or region and plurality of media options that are proximate to the new point or region, including displaying new media options within the array where applicable and optionally modifying the visual appearance of proximate media options, and adjusting the playback parameters of media items proximate the new point or region, by crossfading or otherwise combining the playback of the media items to reflect their relative distances from the new point or region ~ 432

While the user selects new points or regions, for those media options that are proximate, and will be crossfaded or otherwise combined as playback, begin playback of pre-buffered content associated with those media options, and begin download of the associated media items ~ 434

If the user remains within a particular point or region for a period of time, for those media options that are proximate, and will be crossfaded or otherwise combined as playback, begin playback of the associated media items, as appended to the previously-played pre-buffered content ~ 436

*FIGURE 16*

Europäisches
Patentamt

European
Patent Office

Office européen
des brevets

# EUROPEAN SEARCH REPORT

Application Number

EP 16 16 1961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2008/086687 A1 (SAKAI RYUTARO [US] ET AL) 10 April 2008 (2008-04-10)<br>* figures 2-5, 9 *<br>* paragraph [0020] - paragraph [0022] *<br>* paragraph [0033] - paragraph [0042] *<br>----- | 1-3,5-8,<br>10,11<br>4,9 | INV.<br>H04N21/439<br>H04N21/482<br>H04N21/472<br>H04N21/414<br>H04N21/4782<br>H04N21/61 |
| Y | US 2009/046545 A1 (BLINNIKKA TOMI [US]) 19 February 2009 (2009-02-19)<br>* figures 3, 4 *<br>* paragraph [0012] - paragraph [0022] *<br>----- | 4,9 | G06F3/16<br>G06F17/30<br>G11B27/038 |
| Y | US 2001/030660 A1 (ZAINOULLINE ROUSTEM [US]) 18 October 2001 (2001-10-18)<br>* figures 1-4 *<br>* paragraph [0025] - paragraph [0048] *<br>----- | 4,9 | |
| X<br>Y | US 2004/056885 A1 (AZAMI TOSHIHIRO [JP] ET AL) 25 March 2004 (2004-03-25)<br>* figures 3-8 *<br>* paragraph [0051] - paragraph [0082] *<br>----- | 1-3,5-8,<br>10,11<br>4,9 | |
| A | US 2006/259877 A1 (KAMINAGAYOSHI TAKEHIRO [JP]) 16 November 2006 (2006-11-16)<br>* figures 1, 3, 5 *<br>* paragraph [0029] - paragraph [0031] *<br>* paragraph [0038] - paragraph [0041] *<br>----- | 1-11 | TECHNICAL FIELDS SEARCHED (IPC)<br><br>G06F<br>G11B<br>H04N |

The present search report has been drawn up for all claims

| Place of search | Date of completion of the search | Examiner |
|---|---|---|
| Munich | 7 June 2016 | Döttling, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 1961

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2016

| Patent document cited in search report | | Publication date | Patent family member(s) | | Publication date |
|---|---|---|---|---|---|
| US 2008086687 | A1 | 10-04-2008 | CN 101583919 A | | 18-11-2009 |
| | | | EP 2069886 A2 | | 17-06-2009 |
| | | | HK 1138398 A1 | | 16-11-2012 |
| | | | JP 2010506307 A | | 25-02-2010 |
| | | | US 2008086687 A1 | | 10-04-2008 |
| | | | WO 2008045733 A2 | | 17-04-2008 |
| US 2009046545 | A1 | 19-02-2009 | TW 200926156 A | | 16-06-2009 |
| | | | US 2009046545 A1 | | 19-02-2009 |
| | | | WO 2009026101 A1 | | 26-02-2009 |
| US 2001030660 | A1 | 18-10-2001 | NONE | | |
| US 2004056885 | A1 | 25-03-2004 | CN 1494801 A | | 05-05-2004 |
| | | | JP 3910537 B2 | | 25-04-2007 |
| | | | US 2004056885 A1 | | 25-03-2004 |
| | | | WO 02078328 A1 | | 03-10-2002 |
| US 2006259877 | A1 | 16-11-2006 | NONE | | |

EPO FORM P0459

For more details about this annex : see Official Journal of the European Patent Office, No. 12/82